# EUROPEAN PATENT APPLICATION

(11) **EP 4 187 906 A1**
(43) Date of publication of application: **31.05.2023**
(21) Application number: 21383080.5
(22) Date of filing: 30.11.2021
(51) Int. Cl.: H04N 21/234, H04N 21/432, H04N 21/433, H04N 21/44, G06V 20/52, G06V 20/40, G09B 5/08

(54) **PLAYBACK**

(71) Applicant: Nokia Technologies Oy, 02610 Espoo (FI)
(72) Inventor: Kachach, Redouane, 28935 Móstoles, Madrid (ES); Villegas Núñez, Álvaro, 28033 Madrid (ES); González Morín, Diego, 28012 Madrid (ES)
(74) Representative: Balder IP Law, S.L.

(57) **Abstract**

An apparatus comprising means for:
receiving a video stream;
segmenting the video stream into a plurality of display areas;
recording the video stream for a subset of the plurality of display areas; and
enabling user playback control of the recorded video stream within the subset of the plurality of display areas without enabling user playback control of the video stream outside of the subset of the display areas.

## Description

### TECHNOLOGICAL FIELD

Embodiments of the present disclosure relate to playback. Some relate to playback in virtual reality or augmented reality displays.

### BACKGROUND

Some electronic devices, such as some mobile devices, are configured to provide playback of video and/or audio content.

It would be desirable to improve playback by an electronic device.

### BRIEF SUMMARY

According to various, but not necessarily all, embodiments there is provided an apparatus comprising means for:
receiving a video stream;
segmenting the video stream into a plurality of display areas;
recording the video stream for a subset of the plurality of display areas; and
enabling user playback control of the recorded video stream within the subset of the plurality of display areas without enabling user playback control of the video stream outside of the subset of the display areas.

In some examples, segmenting the video stream into a plurality of display areas comprises determining at least one object in the video stream.

In some examples, the video stream is a live video stream of a real-world scene.

In some examples, segmenting the video stream is performed prior to an event in the subset of the plurality of display areas of the video stream and wherein enabling user playback control within the subset of the plurality of display areas enables a user to review the event.

In some examples, enabling user playback control comprises enabling a user to watch again footage from the video stream that has already been presented in the field of view of the user.

In some examples, enabling user playback control within the subset of the plurality of display areas comprises enabling at least one of: pausing, rewinding, fast-forwarding, and adjusting playback speed of at least one display areas within the subset of display areas.

In some examples, the means are configured to reposition display of at least one display area under user playback control.

In some examples, the means are configured to, when the video stream is viewed separately by a plurality of users, enable independent playback control of at least one display area for different users.

In some examples, the means are configured to provide the segmented video stream to at least one display device.

In some examples, the means are configured to discard the video stream for area or areas outside of the subset of areas.

According to various, but not necessarily all, embodiments there is provided a display device comprising an apparatus as described herein.

According to various, but not necessarily all, embodiments there is provided an electronic device comprising an apparatus as described herein and at least one input configured to receive the video stream.

According to various, but not necessarily all, embodiments there is provided a method comprising:
receiving a video stream;
segmenting the video stream into a plurality of display areas;
recording the video stream for a subset of the plurality of display areas; and
enabling user playback control of the recorded video stream within the subset of the plurality of display areas without enabling user playback control of the video stream outside of the subset of the display areas.

In some examples, segmenting the video stream into a plurality of display areas comprises determining at least one object in the video stream.

In some examples, the video stream is a live video stream of a real-world scene.

In some examples, segmenting the video stream is performed prior to an event in the subset of the plurality of display areas of the video stream and wherein enabling user playback control within the subset of the plurality of display areas enables a user to review the event

In some examples, enabling user playback control comprises enabling a user to watch again footage from the video stream that has already been presented in the field of view of the user.

In some examples, enabling user playback control within the subset of the plurality of display areas comprises enabling at least one of: pausing, rewinding, fast-forwarding, and adjusting playback speed of at least one display areas within the subset of display areas.

In some examples, the method comprises repositioning display of at least one display area under user playback control.

In some examples, the method comprises, when the video stream is viewed separately by a plurality of users, enabling independent playback control of at least one display area for different users.

In some examples, the method comprises providing the segmented video stream to at least one display device.

In some examples, the method comprises discarding the video stream for area or areas outside of the subset of areas.

According to various, but not necessarily all, embodiments there is provided a computer program comprising instructions for causing an apparatus to perform:
receiving a video stream;
segmenting the video stream into a plurality of display areas;
recording the video stream for a subset of the plurality of display areas; and
enabling user playback control of the recorded video stream within the subset of the plurality of display areas without enabling user playback control of the video stream outside of the subset of the display areas.

In some examples, segmenting the video stream into a plurality of display areas comprises determining at least one object in the video stream.

In some examples, the video stream is a live video stream of a real-world scene.

In some examples, segmenting the video stream is performed prior to an event in the subset of the plurality of display areas of the video stream and wherein enabling user playback control within the subset of the plurality of display areas enables a user to review the event

In some examples, enabling user playback control comprises enabling a user to watch again footage from the video stream that has already been presented in the field of view of the user.

In some examples, enabling user playback control within the subset of the plurality of display areas comprises enabling at least one of: pausing, rewinding, fast-forwarding, and adjusting playback speed of at least one display areas within the subset of display areas.

In some examples, the computer program comprising instructions for causing an apparatus to perform repositioning display of at least one display area under user playback control.

In some examples, the computer program comprising instructions for causing an apparatus to perform, when the video stream is viewed separately by a plurality of users, enabling independent playback control of at least one display area for different users.

In some examples, the computer program comprising instructions for causing an apparatus to perform providing the segmented video stream to at least one display device.

In some examples, the computer program comprising instructions for causing an apparatus to perform discarding the video stream for area or areas outside of the subset of areas.

According to various, but not necessarily all, embodiments there is provided an apparatus comprising
at least one processor; and
at least one memory including computer program code;
the at least one memory and the computer program code configured to, with the at least one processor, cause the apparatus at least to perform at least a part of one or more methods disclosed herein.

According to various, but not necessarily all, embodiments there is provided an apparatus comprising means for performing at least part of one or more methods disclosed herein.

According to various, but not necessarily all, embodiments there is provided examples as claimed in the appended claims.

The description of a function and/or action should additionally be considered to also disclose any means suitable for performing that function and/or action.

### BRIEF DESCRIPTION

Some examples will now be described with reference to the accompanying drawings in which:
FIG. 1 shows an example of the subject matter described herein;
FIG. 2 shows another example of the subject matter described herein;
FIG. 3 shows another example of the subject matter described herein;
FIG. 4 shows another example of the subject matter described herein;
FIG. 5 shows another example of the subject matter described herein;
FIG. 6 shows another example of the subject matter described herein;
FIG. 7A shows another example of the subject matter described herein;
FIG. 7B shows another example of the subject matter described herein;
FIG. 8A shows another example of the subject matter described herein; and
FIG. 8B shows another example of the subject matter described herein.

### DETAILED DESCRIPTION

Examples of the disclosure relate to apparatus, methods and/or computer programs for and/or involved in playback.

Some examples of the disclosure relate to apparatus, methods and/or computer programs for enabling user playback control of a subset of display areas of a video stream.

The following description and FIGs describe various examples of an apparatus 10 comprising means for:
receiving a video stream 12;
segmenting the video stream 12 into a plurality of display areas 14;
recording the video stream 12 for a subset 16 of the plurality of display areas 14; and enabling user playback control of the recorded video stream 12 within the subset 16 of the plurality of display areas 14 without enabling user playback control of the video stream 12 outside of the subset 16 of the display areas 14.

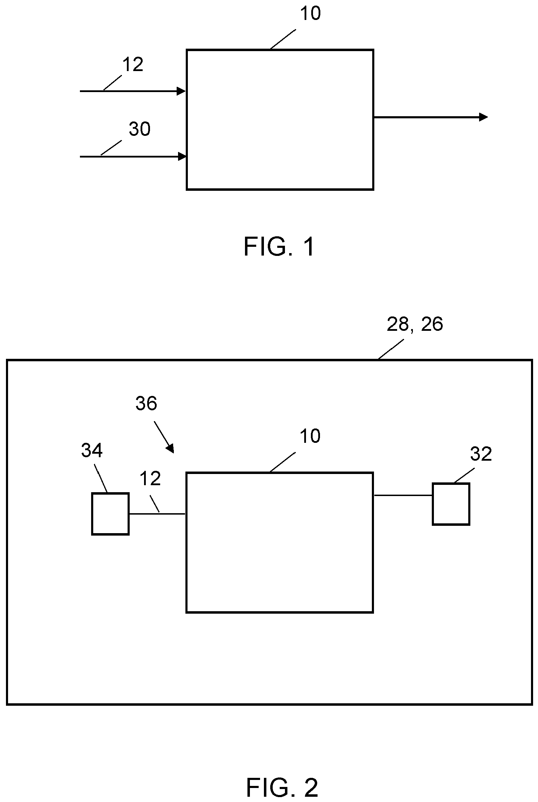

FIG. 1 schematically illustrates an example of an apparatus 10.

In examples, the apparatus 10 is configured to receive a video stream 12, for example from a remote apparatus and/or device such as a remote camera.

In examples, the apparatus 10 is configured to receive the video stream 12 from a local apparatus and/or device such as a local and/or integrated camera.

In examples, the apparatus 10 is configured to receive one or more user inputs 30 for playback control of at least one display area 14 of the video stream 12. The apparatus can be configured to receive the one or more user inputs 30 in any suitable way.

In examples, the apparatus 10 can be comprised and/or integrated in an electronic device 28. See, for example, FIG. 2.

In examples, the video stream 12 is a live video stream of a real-world scene. For example, a video stream 12 of a live lecture, a video stream of a live sporting event and so on.

In examples, the apparatus 10 is configured to segment the video stream 12 into a plurality of display areas 14. For example, segmenting the video stream 12 into a plurality of display areas 12 can comprise determining at least one object 20 in the video stream 12.

As used herein, the term "determining" (and grammatical variants thereof) can include, at least: calculating, computing, processing, deriving, investigating, looking up (for example, looking up in a table, a database or another data structure), ascertaining and the like. Also, "determining" can include receiving (for example, receiving information), accessing (for example, accessing data in a memory) and the like. Also, "determining" can include resolving, selecting, choosing, establishing, and the like.

In examples, the apparatus 10 is configured to segment the video stream 12 prior to an event 22 in a subset 16 of the plurality of display areas 14 of the video stream 12. For example, with regard to a live lecture, the segmentation can occur prior to a particular slide being shown on a whiteboard. For example, with regard to a live sporting event, the segmentation can occur prior to a goal being scored and so on.

In examples, the apparatus 10 is configured to record the video stream 12 for a subset 16 of the plurality of display areas 14. For example, the apparatus 10 can be configured to store the video stream 12 for a subset 16 of the plurality of display areas 14 in local and/or remote memory.

In examples, the apparatus 10 is configured to enable user playback control of the recorded video stream 12 within the subset 16 of the plurality of display areas 14 without enabling user playback control of the video stream 12 outside of the subset 16 of the display areas 14.

In examples, the apparatus 10 is configured to enable user playback control of the recorded video stream 12 within the subset 16 of the plurality of display areas 14 while playing the video stream 12 outside of the subset 16 of the display areas 14 without user playback control.

In examples, enabling user playback control comprises enabling a user to watch again footage from the video stream 12 that has already been presented in the field of view of the user.

In examples, while watching again footage from the video stream 12 that has already been presented in the field of view of the user, the user can continue seeing the video stream 12 outside of the subset 16 of the display areas 14 in real time.

In examples, the apparatus 10 is configured to reposition display of at least one display area 14 under user playback control. For example, the apparatus 10 can receive one or more user inputs 30 and based, at least in part on the received one or more user inputs 30, reposition display of at least one display area 14 under user playback control.

In examples, the apparatus 10 is configured to provide the segmented video stream 12 to at least one display device 26. For example, the apparatus 10 can be configured to provide the segmented video stream 12 to a plurality of display devices 26, such as a plurality of virtual reality display devices, and to enable independent playback control of at least one display area 14 for different users.

In examples, the apparatus 10 is configured to control a display device 26 to display the video stream 12 with associated playback control as described herein.

In examples, the apparatus 10 is configured to discard the video stream, after display, for area or areas 14 outside of the subset 16 of areas 14.

In examples, the apparatus 10 can comprise any number of additional elements not illustrated in the example of FIG. 1.

FIG. 2 schematically illustrates an example of an electronic device 28. In the example of FIG. 2 the electronic device 28 is a display device 26.

In the illustrated example, the electronic device 28 comprises means 34 for receiving a video stream 12, a display 32 and an apparatus 10 as described in relation to FIG. 1.

The electronic device 28 can comprise any suitable electronic device 28. For example, the electronic device 28 can comprise any suitable processing and/or display device.

In examples, the electronic device 28 can comprise any suitable personal device, and/or any suitable mobile device, and/or any suitable wearable device and so on. In examples, electronic device 28 comprises a virtual reality display device and/or an augmented reality display device.

In examples, the electronic device 28 can be considered an apparatus.

The electronic device 28 can comprise any suitable means 34 for receiving a video stream 12, for example any suitable antenna and/or receiver and/or transceiver and so on.

In examples, the means 34 for receiving a video stream 12 can comprise any suitable means for generating and/or creating a video stream 12, for example one or more cameras and/or one or more volumetric capture devices.

In examples, the electronic device 28 can comprise any suitable display 32, such as any suitable virtual reality and/or augmented reality display.

In the example of FIG. 2, the display 32 is local and/or comprised in the electronic device 28 and the apparatus 10 is configured to control the display 32 to display the video stream 12.

However, in examples, the display is remote and/or separate from the electronic device 28 and the electronic device 28 can comprise means configured to transmit the video stream 12, for example one or more antennas, and/or transmitters and/or transceivers and so on.

In examples, the electronic device 28 comprises a virtual reality display device 26, such as a head mounted virtual reality display device 26, and is, for example, configured to display a video stream 12 from a remote location.

Accordingly, in examples, the electronic device 28 can provide a telepresence for a user of the virtual reality display device 26 at the location of the camera(s) from which the video stream 12 is provided. For example, a telepresence from a camera and/or volumetric capture device, such as a 360 degree camera, at a location in a lecture theatre or classroom can be provided.

Accordingly, examples of the disclosure provide for user playback control of a video stream 12 of a location at which the user is not present.

In some examples, the electronic device 28 comprises an augmented reality display device 26, such as a head mounted augmented reality display device 26, and is, for example, configured to record at least part of a scene being witnessed in person by a user of the electronic device 28.

Accordingly, examples of the disclosure provide for user playback control of a video stream 12 of a location at which the user is present.

In examples, the electronic device 28 can comprise any number of additional elements not illustrated in the example of FIG. 2. For example, the electronic device 28 can comprise one or more user interfaces.

Additionally, or alternatively, one or more elements of the electronic apparatus 28 illustrated in the example of FIG. 2 can be integrated and/or combined.

As illustrated in the example of FIG. 2, the means 34 for receiving a video stream 12 and the display 32 are operationally coupled to the apparatus 10 and any number or combination of intervening elements can exist between them (including no intervening elements).

In examples, the electronic device 28 can be considered to comprise at least one input 36 configured receive the video stream 12.

Accordingly, in examples, FIG. 2 illustrates an electronic device 28 comprising an apparatus 10 as described herein and at least one input 36 configured to receive the video stream 12.

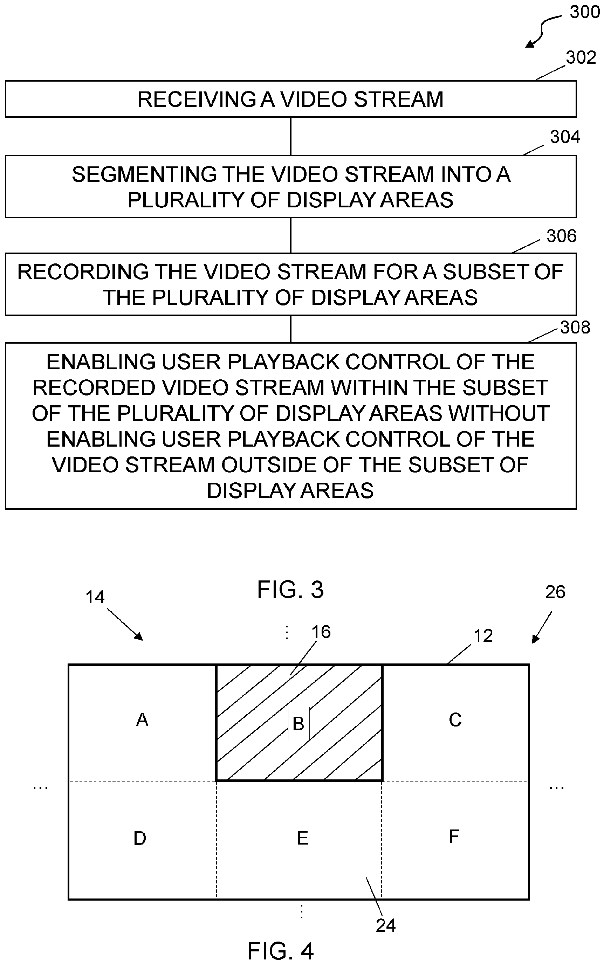

FIG. 3 illustrates an example of a method 300.

One or more features discussed in relation to FIG. 3 can be found in one or more of the other figures. During discussion of FIG. 3, reference will be made to other figures for the purposes of explanation.

In examples, method 300 can be considered a method 300 of enabling user playback control of a video stream 12.

In examples, method 300 can be considered a method 300 of reducing memory requirements for enabling user play back control of a video stream 12.

In examples, method 300 can be considered a method 300 for enabling user playback control of a subset 16 of display areas 14 of a video stream 12.

In examples, method 300 can be performed by any suitable apparatus comprising any suitable means for performing the method 300.

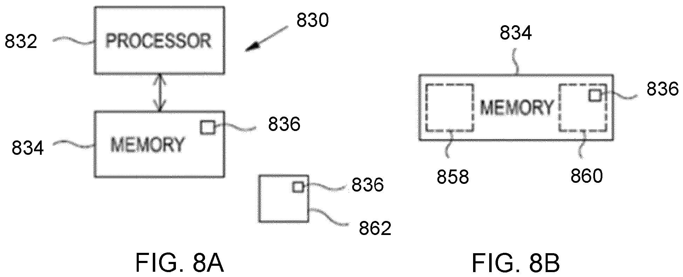

In examples, method 300 can be performed by the apparatus of FIGs 8A and 8B, and/or the apparatus 10 of FIG. 1 and/or the electronic device 28 of FIG. 2.

At block 302, method 300 comprises receiving a video stream 12.

In examples, receiving a video stream 12 can be performed in any suitable way using any suitable method.

In examples, the video stream 12 can be received from a remote device, for example from a device at a location in which a user is not present.

In examples, the video stream 12 can be received from a local device, for example from a device at a location in which a user is present.

In examples, the video stream 12 can be received, directly or indirectly, from any suitable camera device/system, such as, for example, a 360 degree camera device/system configured to provide substantially 360 degrees field of view.

In examples, the video stream 12 can be received, directly or indirectly, from any suitable storage, such as any suitable memory. For example, the video stream 12 can be recorded and stored in memory and receiving the video stream 12 can comprise retrieving the video stream 12 from the memory. In examples, the memory can be local or remote.

In examples, a video stream 12 can be considered information configured to allow control of at least one display 32 to display a video. In examples a video can be considered to comprise associated audio information.

In examples, a video stream 12 can be considered audio and/or visual data configured to be rendered and/or presented by an apparatus and/or device. Accordingly, in examples, a video stream can comprise audio data without visual data.

In examples, a video stream 12 can be considered information for presentation to a user via one or more devices, such as one or more display devices.

In examples, a video stream 12 can be considered information captured by one or more systems comprising one or more cameras.

In examples, the video stream 12 is a live video stream 12 of a real-world scene. For example, the video stream 12 can comprise information of a live real-world scene recorded and/or captured by a system comprising one or more cameras and/or one or more audio capture devices, such as one or more microphones.

For example, the video stream 12 can be a live video stream 12 of a sporting event such as a football match.

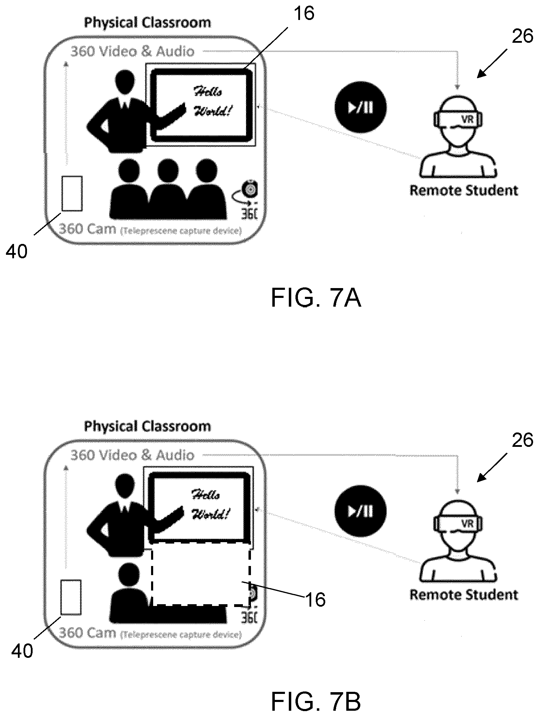

For example, the video stream 12 can be a live video stream 12 of a meeting, for example a business meeting, or a lecture such as a school lesson. See, for example, FIGs 7A and 7B..

In examples, the video stream 12 can be provided to at least one user who is not present at the real-world scene in real-time to allow the user to be virtually present, for example using a virtual reality display device 26.

In examples, the video stream 12 is a live video stream of a location at which a user is present and is, for example, using an augmented reality display device 26.

At block 304, method 300 comprises segmenting the video stream 12 into a plurality of display areas 14.

In examples, segmenting the video stream 12 into a plurality of display areas 14 can be performed in any suitable way using any suitable method. In examples, the video stream 12 can be segmented into any suitable number of display areas 14.

For example, any suitable image segmentation technique or techniques can be used.

In examples, segmenting the video stream 12 into a plurality of display areas 14 is based, at least in part, on user input. For example, a user can provide input to indicate one or more display areas 14 and/or one or more objects 20.

In examples, segmenting the video stream 12 into a plurality of display areas 12 is, at least partly, automated.

In examples, segmenting the video stream 12 into a plurality of display areas 12 is performed automatically, for example by detecting objects, without user input and/or intervention.

A display area 14 can be considered a display portion, and/or a display segment, and/or a display section, and/or a display part, and/or a display zone and so on.

In examples a display area 14 can be considered a sub-area of the overall area to be displayed when displaying the video stream 12.

In examples, a display area 14 can be considered a part of the video stream 12 that is viewable by a user when the video stream 12 is displayed.

By way of example, reference is made to FIG. 4.

In the example of FIG. 4, a video stream 12 is illustrated as viewed and/or as viewable.

In the illustrated example, of FIG. 4, a video stream 12 as viewed, and/or as viewable, is indicated by the solid-line rectangle.

In examples, the video stream 12, when viewed, can have any suitable size and/or shape, as indicated by the three dots to the sides of the rectangle in the example of FIG. 4.

In examples, a user may not be able to view all of the viewable area of the video stream 12 at once. For example, a user using a head mounted virtual reality display device 26 or augmented reality display device 26 may have to turn their head to be able to move the field of view 24 of the user and to be able to view different parts of the video stream 12.

In the example of FIG. 4 the viewable area of the video stream 12 is larger than the field of view 24 of the user. In the example of FIG. 4 the field of view 24 of the user is substantially the size of a dashed-line rectangle.

In the example of FIG. 4, the video stream 12 has been segmented into six display areas 14, labelled 'A' through to 'F'. In the illustrated example, the six display areas 14 have substantially the same size and shape. However, in examples, display areas 14 can have any suitable size and/or shape and can be different sizes and/or shapes.

In examples, the display areas 14 can vary with time. For example, the size and/or shape and/or position of one or more of the display areas 14 can vary with time. For example, the size and/or shape and/or positions of one or more of the display areas 14 can vary at different times in the video stream 12.

In examples, pixels of the video stream 21 are assigned and/or allocated to different display areas 14.

In examples, segmenting the video stream 12 into a plurality of display areas 14 comprises determining at least one object 20 in the video stream 14.

Determining at least one object 20 in the video stream 14 can be performed in any suitable way using any suitable method. For example, any suitable object detection techniques or techniques can be used.

In examples, determining at least one object 20 in the video stream 14 is based, at least in part, on user input. For example, a user can provide one or more inputs to indicate one or more objects 20 in the video stream 12.

In examples, pixels of the video stream 12 are assigned to different objects 20.

In examples, different display areas 14 can be associated with and/or assigned to different objects 20, determined in the video stream 12.

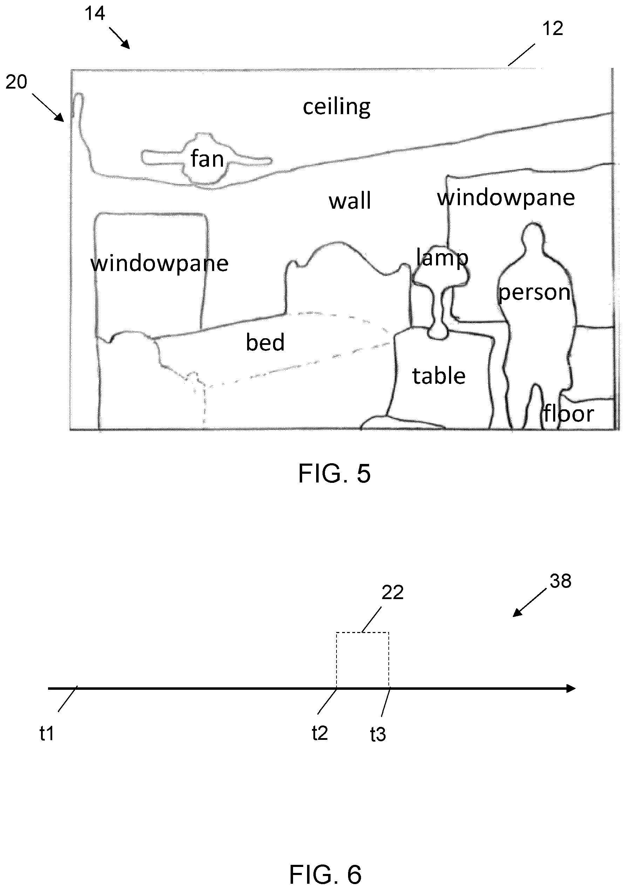

By way of example, reference is made to FIG. 5.

The example of FIG. 5 shows a video stream 12 comprising a plurality of objects 20. In the illustrated example the different objects 20 have been labelled for the purposes of clarity.

In the example of FIG. 5, the different objects/parts of the scene shown in the video stream 12 have been determined and the video stream 12 segmented into different display areas 14 based, at least in part, on the determined objects/parts.

For example, in the illustrated example, the areas of the video stream 12 associated with the person, the bed and the window pane can be determined as display areas 14 and so on.

In examples, display areas 14 can be determined around one or more objects 20 determined in a video stream 12. For example, in the example of FIG. 5, a display area 14 can be determined that encompasses the person, but does not follow the outline of the person and is, for example, rectangular in shape.

Segmenting the video stream 12 into a plurality of display areas 14 can be performed at any suitable time. For example, segmenting the video stream 12 into a plurality of display areas 14 can be performed at the start of the video stream 12.

In examples, segmenting the video stream 12 can be performed as soon as possible. For example, determining one or more objects 20 in the video stream 12 can be performed when one or more objects 20 become present in the video stream 12.

With reference to the example of FIG. 5, the person may not be present in the video stream 12 initially and may enter the scene at some point. After the person has entered the video stream 12, the segmentation involving determining the person as an object 20 can occur.

Accordingly, in examples, the video stream 12 can be segmented any number of times for any suitable reason. In examples the video stream 12 can be re-segmented based, at least in part, on the content of the video stream 12, such as removal and/or introduction of one or more objects, changes to one or more objects and so on.

In examples, segmenting the video stream 12 is performed prior to an event 22 in the video stream 12. See, for example, FIG. 6.

Referring back to FIG. 3, at block 306, method 300 comprises recording the video stream 12 for a subset of the plurality of display areas 14.

In examples, recording the video stream 12 for a subset of the plurality of display areas 14 can be performed in any suitable way using any suitable method.

In examples, recording the video stream 12 for a subset 16 of the plurality of display areas 14 comprises saving and/or storing information/data from the video stream 12 for the subset 16 of the plurality of display areas 14.

In examples, recording the video stream 12 for a subset 16 of the plurality of display areas 14 comprises saving and/or storing information/data to enable user playback control within and/or of the subset 16 of the plurality of display areas 14.

In examples, the information/data for the subset 16 of the plurality of display areas 14 can be saved and/or stored in any suitable way. For example, the information/data for the subset 16 of the plurality of display areas 14 can be saved and/or stored in local and/or remote memory.

Accordingly, in examples, method 300 comprises discarding the video stream 12 for area or areas 14 outside of the subset 16 of areas 14. In examples, this provides in a large reduction in storage requirements for the video stream 12. This can be particularly relevant with regard to 360 degree video and/or high resolution video.

In examples, method 300 comprises discarding the video stream 12 for area or areas 14 outside of the subset 16 of areas 14.

Areas 14 outside of the subset 16 of areas 14 can be considered areas 14 not included in the subset 16 of areas 14.

In examples, the subset 16 of areas 14 can be determined in any suitable way using any suitable method.

In examples, the subset 16 of areas 14 can be automatically determined and/or determined based, at least in part, on one or more user inputs 30.

For example, the subset 16 of areas 14 can be determined based, at least in part, on one or more objects 20 recognised in the video stream 12.

For example, in the example of FIG. 5, the person could be identified as an important object 20 and therefore the area 14 of the video stream 12 associated with the person determined as the subset 16 of the display areas 14.

For example, a user can provide one or more inputs to indicate which area 14 or areas 14 should be included in the subset 16 of display areas 14.

Referring again to the example of FIG. 4, in this example the display area 14 labelled 'B' has been determined as the subset 16 of the display areas 14. That is, in the example of FIG. 4, the subset 16 of the display areas 14 is the area 14 labelled 'B'.

In the example of FIG. 4 the user has provided an input to indicate the area 'B' should be the subset 16 of the display areas 14.

However, in other examples, areas 'A', 'E' and 'C' can represent the subset 16 of the display areas 14 and so on.

Accordingly, in the example of FIG. 4, the video stream 12 for the area labelled 'B' is recorded, and the video stream 12 for the other areas ('A', 'C', 'D', 'E' and 'F') is discarded.

In examples, segmenting the video stream 12 is performed prior to an event 22 in the subset 16 of the plurality of display areas 14 of the video stream 12. By way of example, reference is made to FIG. 6.

FIG. 6 schematically illustrates a timeline 38 of a video stream 12.

In the example of FIG. 6, the video stream 12 starts at the left of the FIG. and time increases to the right of the FIG. as indicated by the arrow.

At time t1, the segmenting of the video stream 12 is performed. For example, the objects 20 in FIG. 5 are determined, or the display areas 14 in FIG. 4 are determined and so on.

At time t2, which is after t1, an event 22 occurs in the video stream 12. The event 22 occurs until time t3, as indicated by the dashed line in the example of FIG. 6.

In examples, the event 22 can be any suitable event 22, for example particular information being shown on a whiteboard, a particular sentence being spoken, a goal being scored and so on.

Accordingly, it can be seen from the example of FIG. 6 that the segmenting is performed before the event 22 occurs. In examples, the event 22 occurs in the subset 16 of the plurality of display areas 14.

In examples, occurrence of the event 22 is not predetermined. For example, during a football match that is being recorded, it is not known if one or more goals will be scored.

Referring back to FIG. 3, at block 308, method 300 comprises enabling user playback control of the recorded video stream 12 within the subset 16 of the plurality of display areas 14 without enabling user playback control of the video stream 12 outside of the subset 16 of the display areas 14.

Consequently, FIG. 3 illustrates a method 300 comprising:
receiving a video stream 12;
segmenting the video stream 12 into a plurality of display areas 14;
recording the video stream 12 for a subset 16 of the plurality of display areas 14; and enabling user playback control of the recorded video stream 12 within the subset 16 of the plurality of display areas 14 without enabling user playback control of the video stream 12 outside of the subset of the display areas 12.

In examples, block 308 can be considered to comprise enabling user playback control of the recorded video stream 12 within the subset 16 of the plurality of display areas 14 while playing the video stream outside of the subset 16 of the display areas 14 without user playback control.

In examples, block 308 can be performed in any suitable way using any suitable method.

Enabling user playback control can be considered enabling a user to control playback of a video stream 12 in any suitable way, for example, using any suitable user input or inputs. For example, one or more control interfaces can be provided to a user to control playback of the recorded video stream 12 within the subset 16 of the plurality of display areas 14.

In examples, user playback control can be enabled for the subset 16 of the plurality of display areas 14 but a user can choose to control playback within one or more of the subset 16 of the plurality of display areas 14 individually.

For example, with regard to FIG. 5, user playback control can be enabled for the 'person' and 'fan' display areas 14, and a user can choose to control playback for the 'person' individually, the 'fan' individually or both the 'fan' and 'person' together.

In examples, enabling user playback control within the subset 16 of the plurality of display areas 14 comprises enabling at least one of: pausing, rewinding, fast-forwarding and adjusting playback speed of at least one display area 14 within the subset 16 of display areas 16.

In examples, rewinding is intended to comprise any change in temporal position backwards from a current temporal play position of the video stream 12.

For example, with regard to FIG. 6, rewinding a video stream 12 is intended to comprise any movement of the play position to the left in the time line. Rewinding can comprise continuous movement and/or skipping in temporal block(s) and so on.

In examples, fast-forwarding is intended to comprise any change in temporal position forwards from a current temporal play position of the video stream 12.

For example, with regard to FIG. 6, fast-forwarding a video stream 12 is intended to comprise any movement of the play position to the right in the time-line. Fast-forwarding can comprise continuous movement and/or skipping in temporal block(s) and so on.

In examples, enabling user playback control comprises enabling a user to watch again footage from the video stream 12 that has already been presented in the field of view 24 of the user.

For example, the footage may have previously been presented in a display area 14 that the user was looking at while the footage was presented.

For example, the footage may be of an event the user has witnessed live and wishes to review using an augmented reality display device 26. Accordingly, in examples, enabling a user to watch again footage from the video stream 12 that has already been presented in the field of view 24 of the user can be considered to comprise enabling a user to watch footage that occurred in the user's real world field of view.

In examples, segmenting the video stream 12 is performed prior to an event 22 in the subset 16 of the plurality of display areas 14 of the video stream 12 and enabling user playback control within the subset 16 of the plurality of display areas 14 enables a user to review the event 22.

For example, with regard to FIG. 6, the segmentation occurs at time t1, prior to the event 22 occurring between times t2 and t3 and enabling user playback control enables a user to review the event 22.

In examples, method 300 comprises repositioning display of at least one display area 14 under user playback control.

In examples, repositioning display of at least one display area 14 under user playback control can be performed in any suitable way using any suitable method.

For example, a user can provide one or more user inputs 30 to control repositioning of the display of at least one display area 14.

By way of example, reference is made to FIGs 7A and 7B.

FIGs 7A and 7B illustrate an example scenario. In the example of FIGs 7A and 7B a user is remote from a physical classroom but is observing a video stream 12 from physical classroom, provided by a 360 degree camera 40.

In the example of FIGs 7A and 7B the user is wearing a head mounted virtual reality display device 26.

In the example of FIG 7A, the whiteboard of the lecturer has been determined as a subset 16 of the display areas 14 of the video stream 12 and the user is exercising playback control of the area 14 of the whiteboard to allow further time for the user to make notes on information that was previously provided on the whiteboard.

However, in order to not miss new information provided on the whiteboard, the user repositions the display area 14 of the whiteboard so that a real-time version of the whiteboard can be seen, in addition to the whiteboard display area 14 that is under user playback control.

This is illustrated in the example of FIG. 7B. It can be seen in the example of FIG. 7B that the area 14 under user playback control has been moved downwards to allow both the real-time whiteboard to be visible.

In examples, method 300 comprises, when the video stream 12 is viewed separately by a plurality of users, enabling independent playback control of at least one display area 14 for different users.

Accordingly, in examples, different users receiving the video stream 12 can control one or more display areas independently of each other.

For example, in the example of FIGs 7A and 7B, the video stream 12 from the camera 40 can be provided to multiple remote users, each of which can, for example, independently control playback of the whiteboard display area 14 without affecting playback of the area 14 for other users.

In examples, method 300 comprises provided an indication to at least one user that at least one other user is using user playback control of at least one display area 14.

In examples, a user can control one or more display areas 14 within the subset 16 differently and independently from each other. For example, a user can rewind display area 'A' in Fig. 4 in a different way to display area 'B' in FIG. 4.

For example, a user may rewind display areas 'C' and 'D' of FIG. 4 and may choose a different playback speed for area 'C' compared to area 'D' and so on.

Examples of the disclosure are advantageous and/or provide technical benefits.

For example, examples of the disclosure allow for user playback control of significant areas of a video stream, while reducing the amount of information that must be stored. For example, discarding the video stream outside of display area(s) for which playback control is to be provided and/or is to be provided reduces significantly storage requirements for the video stream.

For example, examples of the disclosure allow for a user to review one or more events without losing connection with a real-time scene.

For example, examples of the disclosure allow a user to 'pause' one or more areas of a scene/video to allow the user to focus on a certain area or areas which continue playing in real time. For example, a user in a meeting can review a previous slide on a display but does not lose view of the present slide and/or other participants continuing in the meeting. Without this functionality the user would have to skip some of the discussion to catch up, or will then lag the other participants' footage and be unable to join in with real-time discussion.

For example, multiple users can review/share an old view of one or more areas/objects and return to real time without disturbing other users.

Fig 8A illustrates an example of a controller 830. The controller 830 can be used in an apparatus, such as an apparatus 10 of FIG. 1 and/or FIG. 2. In some examples, controller 830 can be considered and apparatus.

Implementation of a controller 830 may be as controller circuitry. The controller 830 may be implemented in hardware alone, have certain aspects in software including firmware alone or can be a combination of hardware and software (including firmware).

As illustrated in Fig 8A the controller 830 may be implemented using instructions that enable hardware functionality, for example, by using executable instructions of a computer program 836 in a general-purpose or special-purpose processor 832 that may be stored on a computer readable storage medium (disk, memory etc) to be executed by such a processor 832.

The processor 832 is configured to read from and write to the memory 834. The processor 832 may also comprise an output interface via which data and/or commands are output by the processor 832 and an input interface via which data and/or commands are input to the processor 832.

The memory 834 stores a computer program 836 comprising computer program instructions (computer program code) that controls the operation of the apparatus when loaded into the processor 832. The computer program instructions, of the computer program 836, provide the logic and routines that enables the apparatus to perform the methods illustrated in FIG. 3 and/or as described herein. The processor 832 by reading the memory 834 is able to load and execute the computer program 836.

The apparatus therefore comprises:
at least one processor 832; and
at least one memory 834 including computer program code
the at least one memory 834 and the computer program code configured to, with the at least one processor 832, cause the apparatus 834 at least to perform:
   receiving a video stream;
   segmenting the video stream into a plurality of display areas;
   recording the video stream for a subset of the plurality of display areas; and enabling user playback control of the recorded video stream within the subset of the plurality of display areas without enabling user playback control of the video stream outside of the subset of the display areas.

As illustrated in Fig 8B, the computer program 836 may arrive at the apparatus via any suitable delivery mechanism 862. The delivery mechanism 862 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 836. The delivery mechanism may be a signal configured to reliably transfer the computer program 836. The apparatus may propagate or transmit the computer program 836 as a computer data signal.

Computer program instructions for causing an apparatus to perform at least the following or for performing at least the following:
receiving a video stream;
segmenting the video stream into a plurality of display areas;
recording the video stream for a subset of the plurality of display areas; and enabling user playback control of the recorded video stream within the subset of the plurality of display areas without enabling user playback control of the video stream outside of the subset of the display areas.

The computer program instructions may be comprised in a computer program, a non-transitory computer readable medium, a computer program product, a machine readable medium. In some but not necessarily all examples, the computer program instructions may be distributed over more than one computer program.

Although the memory 862is illustrated as a single component/circuitry it may be implemented as one or more separate components/circuitry some or all of which may be integrated/removable and/or may provide permanent/semi-permanent/ dynamic/cached storage.

In examples, the memory 834 comprises a random-access memory 858 and a read only memory 860. In examples, the computer program 836 can be stored in the read only memory 860.

Although the processor 832 is illustrated as a single component/circuitry it may be implemented as one or more separate components/circuitry some or all of which may be integrated/removable. The processor 832 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the FIG. 3 and/or as described herein may represent steps in a method and/or sections of code in the computer program 836. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

Thus, the apparatus can comprise means for:
receiving a video stream;
segmenting the video stream into a plurality of display areas;
recording the video stream for a subset of the plurality of display areas; and enabling user playback control of the recorded video stream within the subset of the plurality of display areas without enabling user playback control of the video stream outside of the subset of the display areas.

In examples, an apparatus can comprise means for performing one or more methods, and/or at least part of one or more methods, as disclosed herein.

In examples, an apparatus can be configured to perform one or more methods, and/or at least part of one or more methods, as disclosed herein.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a subclass of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavouring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
receiving a video stream;
segmenting the video stream into a plurality of display areas;
recording the video stream for a subset of the plurality of display areas; and
enabling user playback control of the recorded video stream within the subset of the plurality of display areas without enabling user playback control of the video stream outside of the subset of the display areas.

2. An apparatus as claimed in claim 1, wherein segmenting the video stream into a plurality of display areas comprises determining at least one object in the video stream.

3. An apparatus as claimed in claim 1 or 2, wherein the video stream is a live video stream of a real-world scene.

4. An apparatus as claimed in any preceding claim, wherein segmenting the video stream is performed prior to an event in the subset of the plurality of display areas of the video stream and wherein enabling user playback control within the subset of the plurality of display areas enables a user to review the event.

5. An apparatus as claimed in any preceding claim, wherein enabling user playback control comprises enabling a user to watch again footage from the video stream that has already been presented in a field of view of the user.

6. An apparatus as claimed in any preceding claim, wherein enabling user playback control within the subset of the plurality of display areas comprises enabling at least one of: pausing, rewinding, fast-forwarding, and adjusting playback speed of at least one display area within the subset of display areas.

7. An apparatus as claimed in any preceding claims, further comprising means for repositioning display of at least one display area under user playback control.

8. An apparatus as claimed in any preceding claim, wherein the means are configured to, when the video stream is viewed separately by a plurality of users, enable independent playback control of at least one display area for different users.

9. An apparatus as claimed in any preceding claim, wherein the means are configured to provide the segmented video stream to at least one display device.

10. An apparatus as claimed in any preceding claim, wherein the means are configured to discard the video stream for area or areas outside of the subset of the display areas.

11. A display device comprising an apparatus as claimed in at least one of claims 1 to 10.

12. An electronic device comprising an apparatus as claimed in at least one of claims 1 to 10 and at least one input configured to receive the video stream.

13. A method comprising:
receiving a video stream;
segmenting the video stream into a plurality of display areas;
recording the video stream for a subset of the plurality of display areas; and
enabling user playback control of the recorded video stream within the subset of the plurality of display areas without enabling user playback control of the video stream outside of the subset of the display areas.

14. A method as claimed in claim 13, wherein enabling user playback control comprises enabling a user to watch again footage from the video stream that has already been presented in a field of view of the user.

15. A computer program comprising instructions for causing an apparatus to perform:
receiving a video stream;
segmenting the video stream into a plurality of display areas;
recording the video stream for a subset of the plurality of display areas; and
enabling user playback control of the recorded video stream within the subset of the plurality of display areas without enabling user playback control of the video stream outside of the subset of the display areas.
